# EUROPÄISCHE PATENTSCHRIFT

(11) **EP 2 607 021 B1**
(45) Veröffentlichungstag und Bekanntmachung des Hinweises auf die Patenterteilung: **06.05.2015**
(21) Anmeldenummer: 11194405.4
(22) Anmeldetag: 19.12.2011
(51) Int. Cl.: B25B 27/06, B23P 19/02

(54) **Abzugsvorrichtung für Radsatzlager von Schienenfahrzeugen**
Extraction device for bogie bearings of track vehicles
Dispositif d'aspiration pour roulements de roue de véhicules sur rails

(43) Veröffentlichungstag der Anmeldung: 26.06.2013
(73) Patentinhaber: Schweizerische Bundesbahnen SBB, 3000 Bern (CH)
(72) Erfinder: Dzeba, Gordan, 5610 Wohlen (CH)
(74) Vertreter: Rutz & Partner

(56) Entgegenhaltungen:
- EP-A1- 2 241 405
- DE-U1-202007 004 424
- NL-C2- 1 035 439
- RU-C1- 2 003 452
- SU-A1- 1 691 051
- US-A- 4 648 166
- US-A- 5 167 057

## Beschreibung

Die Erfindung betrifft eine Abzugsvorrichtung für Radsatzlager von Schienenfahrzeugen.

Lagervorrichtungen für Radsätze von Schienenfahrzeugen sind beispielsweise in [1], Wolfgang Hanneforth, Werner Fischer, Laufwerke, transpress, VEB Verlag für Verkehrswesen, Berlin 1986, Seiten 17-20, beschrieben.

Ein Radsatz besteht aus einer Radsatzwelle und zwei kraftschlüssig auf der Radsatzwelle angebrachten Rädern. Die Räder sind mit Radprofilen versehen, die die Führung der Radsätze im Gleis bewirken. Typischerweise werden die Radsätze an beiden Enden mit einem Radsatzlager versehen, das auf einen Fortsatz der Radsatzwelle aufgepresst wird, welcher das zugehörige Rad nach aussen überragt. Dieser Grundaufbau gilt für Radsätze sowohl von Personenwagen und Güterwagen, als auch von Triebfahrzeugen.

Gemäss [1] ist das Radsatzlager eines der am höchsten beanspruchten Maschinenelemente am Schienenfahrzeug. Es hat statische und dynamische Kräfte in vertikaler und horizontaler Richtung aufzunehmen. Die statischen Kräfte sind die anteiligen Fahrzeuggewichtskräfte und Radsatz Querkräfte, die beim Bogenlauf der Schienenfahrzeuge auftreten. Die den statischen Kräften überlagerten dynamischen Kräfte ergeben sich aus dem Überfahren von Gleisunebenheiten, Rangierstössen sowie dem Anfahren und Bremsen.

Radsatzlager, welche üblicherweise mit Wälzlagern bestückt sind, sind z.B. in [2], Firmenschrift "Die Gestaltung von Wälzlagerungen" der FAG OEM und Handel AG, Publ.-Nr. WL 00 200/5 DA, oder in [3], EP1006288A2, gezeigt.

Gemäss [1] weisen Radsatzlager eine Grenznutzungsdauer auf, die von der Werkstoffermüdung der Laufringe und Wälzkörper, dem Verschleiss dieser Bauteile und der Käfige sowie ihrer Wartung abhängig ist. Es empfiehlt sich daher, die Radsatzlager nach einer festgelegten Betriebsdauer oder nach einer festgelegten Anzahl Betriebskilometern zu warten oder zu ersetzen.

Für eine Gesamtüberholung oder den Austausch der Radsatzlager werden diese von der Radsatzwelle entfernt. Dazu kann eine mit einer Ausnehmung versehene Abzugsplatte zwischen das Rad und das Radsatzlager eingesetzt werden, so dass die Radsatzwelle bzw. ein Fortsatz der Radsatzwelle innerhalb der Ausnehmung positioniert ist. In der Folge wird ein mit einer Halteplatte verbundener Abzugszylinder gegen die Radsatzwelle gedrückt. Entsprechend der auf die Radsatzwelle ausgeübten Andruckkraft wird von der Abzugsplatte eine Zugkraft auf das Radsatzlager übertragen, mittels der das Radsatzlager von der Radsatzwelle abgezogen wird.

Damit das Radsatzlager korrekt von der Radsatzwelle gelöst werden kann, muss die aus der Halteplatte und der Abzugsplatte bestehende Abzugsvorrichtung präzise positioniert werden, was mit Aufwand und Schwierigkeiten verbunden ist. Sofern die Abzugsvorrichtung nicht präzise eingesetzt wird, wirken die Abzugskräfte nicht gleichmässig auf das Radsatzlager ein, weshalb sich das Radsatzlager gegebenenfalls nicht von der Radsatzwelle lösen lässt oder sogar beschädigt wird. Entsprechend den Kräften, die vom Radsatzlager während des Betriebs aufzunehmen sind, muss dieses von der Radsatzwelle mit dazu korrespondierenden Kräften gehalten werden. Für das Entfernen der Radsatzlager von der Radsatzwelle sind daher erhebliche Abzugskräfte aufzuwenden. Aus diesem Grund entstehen auch an der Abzugsvorrichtung regelmässig Deformationen, welche eine ungleichmässige Anwendung der Abzugskräfte auf das Radsatzlager zur Folge hat.

Somit resultieren bei den Wartungsarbeiten ein relativ hoher Materialausfall und entsprechende Kosten für den Ersatz beschädigter Radsatzlager. Weiterhin muss die Abzugsvorrichtung regelmässig ersetzt werden.

Die bekannte Abzugsvorrichtung ist zudem schwierig zu handhaben, was einen hohen zeitlichen Aufwand für die Wartungsarbeiten mit sich bringt. Die Handhabung der schweren Metallplatten, die mit manuellem Eingriff in die gewünschten Positionen zu bringen sind, birgt ferner Sicherheitsrisiken und erfordert überdurchschnittlich hohen Körpereinsatz Weiterhin ist den eingangs genannten Dokumenten zu entnehmen, dass zahlreiche verschiedene Typen von Radsatzlagern im Einsatz sind, weshalb unterschiedliche Abzugsvorrichtungen benötigt werden.

Die Offenlegungsschrift US4648166A offenbart eine Abzugsvorrichtung mit einem Hebelwerk bestehend aus mehreren hebelförmigen Greifwerkzeugen, die je über einen Verbindungshebel mit einem Nocken verbunden sind, der in einen in einer Führungsplatte vorgesehenen Schlitz eingreift. Beim Drehen der Führungsplatte wird der Verbindungshebel um eine Achse gedreht, so dass die Greifwerkzeuge je nach Drehrichtung auseinander oder gegeneinander geführt werden.

Die Offenlegungsschriften EP2241405A1, US5167057A DE202007004424U1 und SU1691051A1 offenbaren weitere Abzugsvorrichtungen mit einem Hebelwerk bestehend aus mehreren hebelförmigen Greifwerkzeugen, die je mittels eines Verbindungshebels auseinander oder gegeneinander geführt werden können.

Die Offenlegungsschrift RU2003452C1 offenbart eine Abzugsvorrichtung mit zwei von Stangen gehaltenen Greifwerkzeugen, die gegeneinander gefahren werden können, um ein an einem Radsatz montiertes Lager zu erfassen.

Der vorliegenden Erfindung liegt daher die Aufgabe zugrunde, eine verbesserte Abzugsvorrichtung für Radsatzlager von Schienenfahrzeugen, wie Personenwagen, Güterwagen oder Triebfahrzeuge, zu schaffen.

Insbesondere ist eine Abzugsvorrichtung zu schaffen, mittels der beliebige Typen von Radsatzlagern rasch und unbeschädigt von einer Radsatzwelle bzw. vom Fortsatz einer Radsatzwelle gelöst werden können.

Beim Einsatz der Abzugsvorrichtung sollen Sicherheitsrisiken, die bei manuellen Eingriffen im Bereich der Radsatzlager üblicherweise auftreten, vermieden werden.

Die Abzugsvorrichtung soll ferner kaum einem Verschleiss unterworfen sein und mit minimalem Aufwand eingesetzt und gewartet werden können.

Diese Aufgabe wird mit einer Abzugsvorrichtung gelöst, welche die in Anspruch 1 angegebenen Merkmale aufweist. Vorteilhafte Ausgestaltungen der Erfindung sind in weiteren Ansprüchen angegeben.

Die erfindungsgemässe Abzugsvorrichtung erlaubt es, Radsatzlager rasch und praktisch ohne manuellen Eingriff von Radsatzwellen eines Schienenfahrzeugs abzuziehen. Dazu sind Haltewerkzeuge vorgesehen, die in Eingriff mit dem auf einer Radsatzwelle montierten Radsatzlager gebracht werden. Ferner ist eine Antriebsvorrichtung vorgesehen, mittels der eine Druckkraft auf die Radsatzwelle und eine entsprechende Abzugskraft auf die Haltewerkzeuge übertragbar sind.

Erfindungsgemäss sind die Haltewerkzeuge auf einem Werkzeugring vorzugsweise radial gegeneinander verschiebbar gelagert und je mit einem Mitnehmer verbunden, welcher in einer Bahn eines drehbar gelagerten und mit einem Kulissenantrieb gekoppelten Kulissenrings geführt ist.

Vorzugsweise ist jedes der Haltewerkzeuge von einem Führungsschlitten gehalten, welcher entlang einem vorzugsweise radial ausgerichteten Führungsprofilelement verschiebbar gehalten ist. Jede Kulissenbahn ist gegenüber der Längsachse des zugehörigen Führungsprofilelements geneigt, weshalb der Mitnehmer zusammen mit dem zugehörigen Führungsschlitten bei einer Drehung des Kulissenrings entlang dem Führungsprofilelement radial nach aussen oder nach innen verschoben wird.

Zum Abziehen eines Radsatzlagers wird die Abzugsvorrichtung koaxial zur Radsatzwelle ausgerichtet und so weit gegen das abzuziehende Radsatzlager geführt, bis die Haltewerkzeuge hinter das Radsatzlager greifen können. Anschliessend wird der Kulissenring derart gedreht, dass die Haltewerkzeuge gegeneinander gefahren werden und das Radsatzlager hintergreifen. In einer vorzugsweisen Ausgestaltung weisen die Haltewerkzeuge vorzugsweise um 90° gegeneinander geneigte Werkzeugfinger auf, welche auch bei spärlichen Raumverhältnissen in den Zwischenraum zwischen dem Rad und dem Radsatzlager eingeführt werden können. In dieser Ausgestaltung können die Haltewerkzeuge verschiedenartige Radsatzlager erfassen. Sofern ein Radsatzlager aussergewöhnliche Dimensionen aufweist, so werden entsprechend angepasste Haltewerkzeuge auf die Führungsschlitten aufgesetzt und mit einem Montagebolzen befestigt. Die Umrüstung der Haltewerkzeuge kann dabei mit wenigen Handgriffen durchgeführt werden.

Durch eine präzise Ausrichtung der Abzugsvorrichtung koaxial zur Radsatzwelle und die gleichmässige synchrone Verschiebung der Haltewerkzeuge gegen das Radsatzlager gelingt es, das Radsatzlager gleichmässig zu erfassen. Mittels der gleichmässig über den Werkzeugring verteilten Haltewerkzeuge können die Abzugskräfte somit gleichmässig auf das Radsatzlager übertragen werden. Entsprechend der erforderlichen Abzugskraft wird der Werkzeugring mit einer Anzahl von Haltewerkzeugen bestückt, durch die gewährleistet wird, dass die Höhe der Teilkräfte, die auf das Radsatzlager einwirken, einen vorgegebenen Maximalwert nicht überschreitet. Die gesamte Abzugskraft wird daher auf eine entsprechende Anzahl von Haltewerkzeugen aufgeteilt.

In einer bevorzugten Ausgestaltung wird die angewendete Abzugskraft gemessen, so dass die Höhe der über die Haltewerkzeuge auf das Radsatzlager einwirkenden Teilkräfte bestimmt und eine Überbeanspruchung des Radsatzlagers und der Haltewerkzeuge verhindert werden kann. Bei der Verwendung der erfindungsgemässen Abzugsvorrichtung treten beim Abziehen der Radsatzlager von den Radsatzwellen daher kaum mehr Schäden auf, weshalb Verluste bei den Wartungsarbeiten deutlich reduziert werden können.

Die Positionierung und Ausrichtung des Spannkopfs der Abzugsvorrichtung können anhand einer damit gekoppelten Transportvorrichtung rasch und bequem vollzogen werden. Der gesamte Vorgang kann automatisch oder zumindest halbautomatisch durchgeführt werden, weshalb eine erhebliche Entlastung des Wartungspersonals resultiert. Da manuelle Eingriffe im Bereich des Radsatzlagers nicht mehr erforderlich sind, werden Sicherheitsrisiken praktisch vollständig ausgeschlossen.

Das ansonsten arbeitsintensive Abziehen der Radsatzlager reduziert sich auf eine Routinemassnahme von kurzer Dauer, die ohne körperlichen Einsatz bequem durchgeführt werden kann. Das Wartungspersonal wird somit erheblich entlastet und kann sich praktisch ausschliesslich der Wartung der Radsatzlager widmen.

Die Abzugsvorrichtung ist aus massiven Einzelteilen aus Metall zusammengesetzt, die kaum einem Verschleiss unterliegen. Sollte trotzdem eine Verschleisserscheinung oder ein Defekt auftreten, so können einzelne Teile der Abzugsvorrichtung rasch und bequem ausgetauscht werden.

Die mit dem Haltewerkzeug versehenen Führungsschlitten weisen ein Aufnahmeprofil auf, welches der Aufnahme des zugehörigen Führungsprofilelements dient, das mittels Montageschrauben vorzugsweise radial ausgerichtet auf dem Werkzeugring montiert wird. Der Werkzeugring, die Profilelemente sowie die Führungsschlitten mit den darauf montierten Haltewerkzeugen bilden zusammen den Spannkopf der Abzugsvorrichtung, welcher die Abzugskräfte auf das Radsatzlager überträgt. Der Werkzeugring weist vorzugsweise die Form eines Rades mit radial verlaufenden Streben auf, auf denen die Führungsprofilelemente montiert werden. Dieser einfache und trotzdem sehr stabile Aufbau des Spannkopfs erlaubt einen raschen und präzisen Zugriff auf die Radsatzlager.

In vorzugsweisen Ausgestaltungen ist jeder Führungsschlitten mittels wenigstens einer, vorzugsweise mittels vier Führungsstangen, welche durch eine oder mehrere Führungsöffnungen im Werkzeugring hindurch geführt sind, mit dem zugehörigen Mitnehmer verbunden. Der Mitnehmer weist vorzugsweise ein in die zugehörige Kulissenbahn eingreifendes Führungsteil, wie eine Führungsrolle, sowie eine Mitnehmerplatte auf, in die die Führungsstangen eingesetzt werden.

Zum Anziehen der Haltewerkzeuge bzw. zum Verschieben der Führungsschlitten ist eine Anziehvorrichtung vorgesehen, welche die Mitnehmer umfasst, die in Kulissenbahnen eines Kulissenrings geführt sind. Der Kulissenring ist an dessen äusserem Rand vorzugsweise mit einem Zahnrad oder einem Zahnradsegment verbunden, welches vom Kulissenantrieb über ein Zahnrad angetrieben wird. Das Zahnrad wird vorzugsweise mittels einer Zahnstange oder einem Zahnradsegment angetrieben, welche bzw. welches durch elektrische, pneumatische oder hydraulische Antriebsmittel vor und zurück bewegt werden kann. Besonders vorteilhaft bei dieser Art des Antriebs ist, dass der auf die Haltewerkzeuge einwirkende Druck bis zum Abschluss des Abzugsvorganges aufrechterhalten werden kann. Das abzuziehende Radsatzlager wird daher stets fest und spielfrei gehalten, so dass der Abzugsvorgang jeweils kontrolliert abläuft. Durch eine Verschiebung der Zahnstange in die andere Richtung werden die Haltewerkzeuge wieder auseinander gefahren, wodurch das abgezogene Radsatzlager freigegeben wird.

Zum Halten des Spannkopfs und der Anziehvorrichtung ist eine Haltevorrichtung vorgesehen, die vorzugsweise einen Führungsring mit einem daran angeformten Flanschring umfasst, welcher in den Kulissenring eingreift und mittels Montageschrauben einerseits mit dem Werkzeugring und anderseits mit ersten Enden von Distanzwellen verbunden ist, deren zweite Enden mit einer Halteplatte verbunden sind, von der zusätzlich die Antriebsvorrichtung gehalten ist.

Bei dieser Ausgestaltung resultiert mit minimalem Aufwand ein einfacher, kompakter und vor allem sehr stabiler Aufbau der gesamten Vorrichtung. Vorzugsweise sind wenigstens sechs über den Umfang der Halteplatte gleichmässig verteilte Distanzwellen vorgesehen, welche die Zugkraft von der Halteplatte auf die Werkzeugplatte übertragen.

In einer bevorzugten Ausgestaltung ist jedem der Haltewerkzeuge eine Distanzwelle zugeordnet, die vorzugsweise derart angeordnet ist, dass sich die Achsen der Distanzwellen und die Bahnen der Haltewerkzeuge bzw. die Achsen der Führungsprofilelemente in dem Bereich schneiden, in dem die Haltewerkzeuge das Radsatzlager erfassen. Auf diese Weise wird die Zugkraft von der Halteplatte unter weitgehender Vermeidung von Momenten, welche die Abzugsvorrichtung deformieren könnten, koaxial zu den Achsen der Distanzwellen auf die Haltewerkzeuge übertragen. Aufgrund des vorteilhaften statischen Aufbaus der Abzugsvorrichtung kann diese trotz der enorm hohen Abzugskräfte relativ schlank dimensioniert werden.

Die Antriebsvorrichtung kann eine beliebige Antriebseinheit aufweisen. Beispielsweise wird ein hydraulisch, pneumatisch oder elektrisch betriebener Antrieb vorgesehen, welcher einen Zylinder antreibt, der durch den Führungsring, den Kulissenring und den Werkzeugring hindurch gegen die Radsatzwelle verschiebbar ist, nachdem diese koaxial zur Hauptachse der Abzugsvorrichtung und somit koaxial zur Verschiebungsrichtung des Zylinders ausgerichtet wurde.

Der Zylinderantrieb wird vorzugsweise über eine Druckmessvorrichtung mit dem Zylinder verbunden, so dass die auftretenden Kräfte ermittelt und gegebenenfalls begrenzt werden können, um einer Überlastung der Abzugsvorrichtung vorzubeugen.

In bevorzugten Ausgestaltungen ist die Halteplatte gegebenenfalls über ein Drehgelenk mit einer Transportvorrichtung verbunden, die eine Stütze aufweist, welche entlang von Schienen verschiebbar und/oder in der Höhe verstellbar ist. Auf diese Weise kann der Spannkopf auf eine gewünschte Höhe gefahren und gegen das Radsatzlager gedreht werden. Nach dem Abzug des Radsatzlagers kann der Spannkopf geschwenkt werden, um das Radsatzlager an passender Stelle freizugeben.

Die Stütze wird vorzugsweise von einem Führungswagen gehalten, welcher Laufwerke aufweist, die formschlüssig mit den zugehörigen Führungsschienen verbunden sind. Auch unter Krafteinwirkung bleibt der Führungswagen somit von den Führungsschienen gehalten und die Stütze senkrecht ausgerichtet. Die erfindungsgemässe Abzugsvorrichtung kann daher mit minimalem Kraftaufwand zu einer gewünschten Position gefahren und dort präzise ausgerichtet werden.

Nachfolgend wird die Erfindung anhand von Zeichnungen näher erläutert. Dabei zeigt:
- Fig. 1: eine erfindungsgemässe Abzugsvorrichtung 1 mit einem Spannkopf 10, der mit einer Anziehvorrichtung 40 gekoppelt und über eine Haltevorrichtung 20 mit einer Antriebsvorrichtung 50 und einer Transportvorrichtung 30 verbunden ist;
- Fig. 2: eine Seitenansicht der Abzugsvorrichtung 1 von Figur 1 mit dem Spannkopf 10, auf dem Haltewerkzeuge 15 auf Führungsprofilelementen 12 auseinander gefahren sind;
- Fig. 3: eine Frontansicht der Abzugsvorrichtung 1 von Figur 1;
- Fig. 4: die Abzugsvorrichtung 1 von Figur 1 von oben gesehen mit der Anziehvorrichtung 40, welche einen Kulissenring 41 mit einem daran befestigten Zahnradsegment 43 aufweist, das von einem Kulissenantrieb 42 mittels eines Zahnrads 421 angetrieben wird;
- Fig. 4a: das Zahnradsegment 43 von Figur 4;
- Fig. 5: der Spannkopf 10, die Anziehvorrichtung 40 die Haltevorrichtung 20 und die Antriebsvorrichtung 50 der Abzugsvorrichtung 1 von Figur 1 in räumlicher Explosionsdarstellung;
- Fig. 6: ein Detaildarstellung eines Teils des Spannkopfs 10 und der Anziehvorrichtung 40 von Figur 5 mit einem Haltewerkzeug 15, einem Führungsschlitten 13 und einem Führungsprofilelement 12, welche auf einem Werkzeugring 11 montiert werden sowie mit einem Mitnehmer 412, welcher in eine Kulissenbahn 411 des Kulissenrings 41 eingesetzt wird;
- Fig. 6a: der Führungsschlitten 13 von Figur 6 als Drahtmodell gezeigt;
- Fig. 7: der Spannkopf 10, die Anziehvorrichtung 40 die Haltevorrichtung 20 und die Antriebsvorrichtung 50 der Abzugsvorrichtung 1 von Figur 1 in seitlicher Explosionsdarstellung;
- Fig. 8a: den Spannkopf 10 von vorn mit zurück gefahrenen Haltewerkzeugen 15;
- Fig. 8b: den Spannkopf 10 von vorn mit teilweise ausgefahrenen Haltewerkzeugen 15;
- Fig. 8c: den Spannkopf 10 von vorn mit vollständig ausgefahrenen Haltewerkzeugen 15;
- Fig. 9a: den Spannkopf 10 im Zustand von Figur 8a mit zurück gefahrenen Haltewerkzeugen 15, die ein Radsatzlager 83 eines Radsatzes 8 umfassen;
- Fig. 9b: den Spannkopf 10 im Zustand von Figur 8c mit gegen das Radsatzlager 83 gefahrenen Haltewerkzeugen 15; und
- Fig. 9c: den Spannkopf 10 mit dem vom Fortsatz 811 der Radsatzwelle 81 abgezogenen Radsatzlager 83.

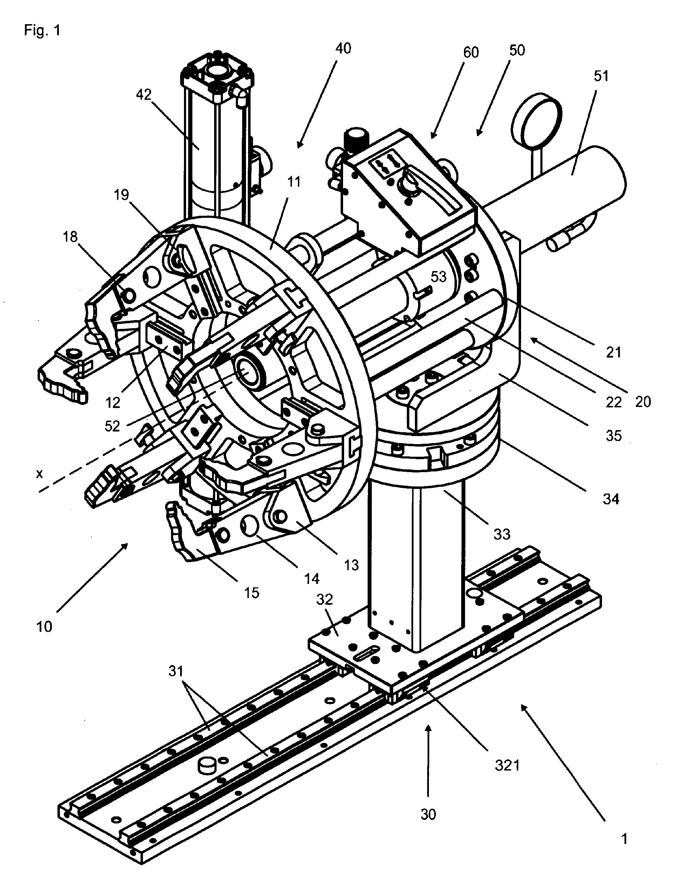

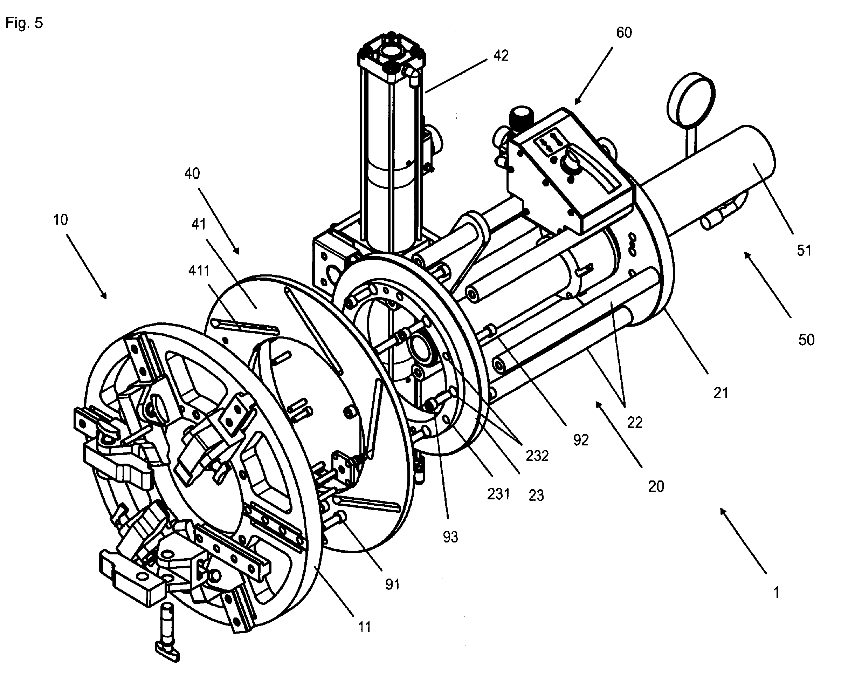

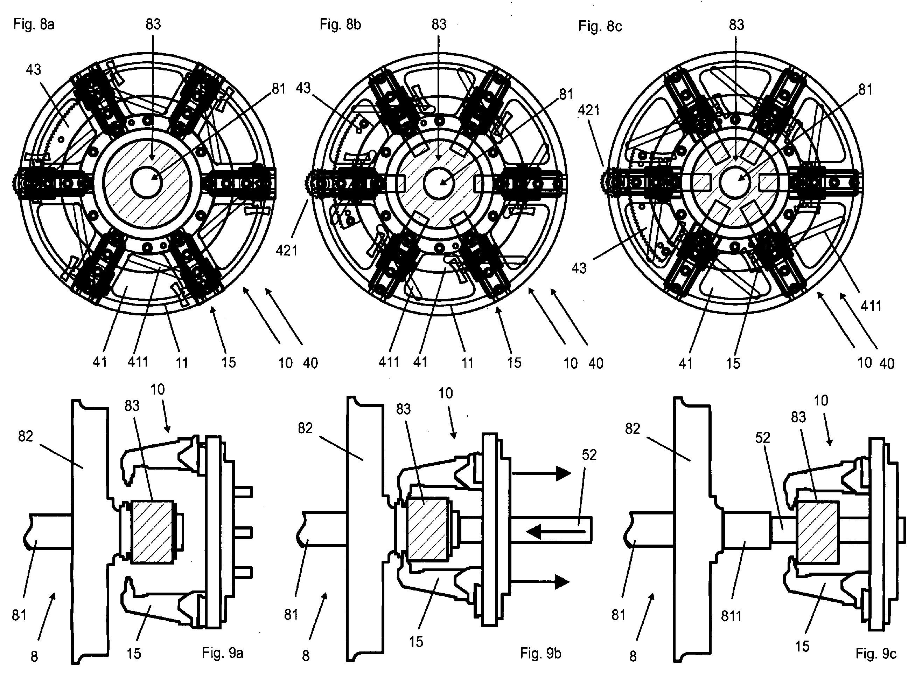

Die Figuren 1, 2 , 3 und 4 zeigen in einer vorzugsweisen Ausgestaltung eine erfindungsgemässe Abzugsvorrichtung 1, mittels der Radsatzlager 83 von einer Radsatzwelle 81 bzw. vom Fortsatz 811 eine Radsatzwelle abgezogen werden können, wie dies in den Figuren 9a, 9b und 9c gezeigt ist. In den Figuren 5, 6 und 7 sind wesentliche Teile der Abzugsvorrichtung 1 je in einer Explosionsdarstellung gezeigt.

Die Abzugsvorrichtung 1 umfasst einen Spannkopf 10, eine Haltevorrichtung 20, eine Transportvorrichtung 30, eine Anziehvorrichtung 40, eine Antriebsvorrichtung 50 und eine Steuervorrichtung 60. Der Spannkopf 10, der dem Erfassen und Halten eines Radsatzlagers 83 dient, ist mit der Anziehvorrichtung 40 gekoppelt und über die Haltevorrichtung 20 mit der Transportvorrichtung 30 sowie mit der Antriebsvorrichtung 50 verbunden.

Der Spannkopf 10 weist einen Werkzeugring 11 auf, welcher die Form eines Rades oder einer runden Platte mit einer kreisrunden zentralen Öffnung aufweist. Auf dem Werkzeugring 11 sind sechs radial ausgerichtete Führungsprofilelemente 12 in gleichem Abstand angeordnet. Jedes Führungsprofilelement 12 weist ein Extrusionsprofil mit einem T-Profil-förmigen Querschnitt auf. Das Extrusionsprofil korrespondiert zu einem Aufnahmeprofil 133 eines Führungsschlittens 13, welcher auf das Führungsprofilelement 12 aufgesetzt und entlang diesem radial nach innen oder nach aussen verschoben werden kann.

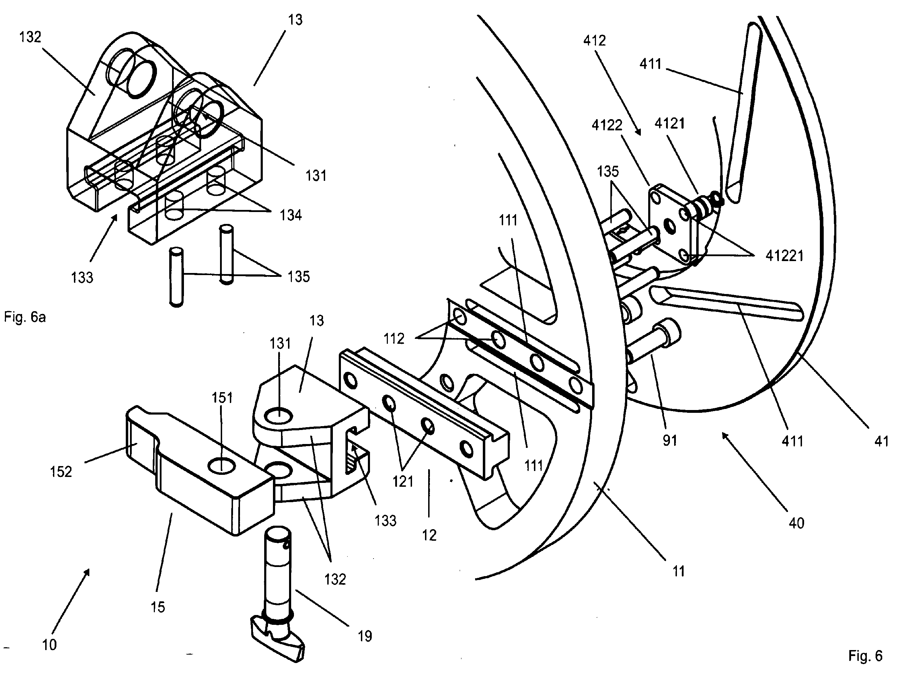

Auf jedem Führungsschlitten 13 ist über ein vorzugsweise vorgesehenes Zwischenstück 14 ein Haltewerkzeug 15 montiert, welches nach innen gegen die Längsachse x der Abzugsvorrichtung 1 ausgerichtete Werkzeugfinger 152 aufweist. Das Zwischenstück 14 ist mittels eines Montagebolzens 19 mit dem Führungsschlitten 13 verbunden. Das Haltewerkzeug 15 ist mittels eines Werkzeugbolzens 18 mit dem Zwischenstück verbunden. Nach dem Einsetzen der Bolzen 18 und 19 ist das Haltewerkzeug 15 starr mit dem Führungsschlitten 13 verbunden. Der Führungsschlitten 13 kann somit mit beliebigen Haltewerkzeugen 15 bestückt und konfiguriert werden, um unterschiedliche Radsatzlager 83 optimal ergreifen zu können. Dabei ist es auch möglich, ein Haltewerkzeug 15 ohne Zwischenstück 14 direkt mit dem Führungsschlitten 13 zu verbinden, wie dies in Figur 6 gezeigt ist.

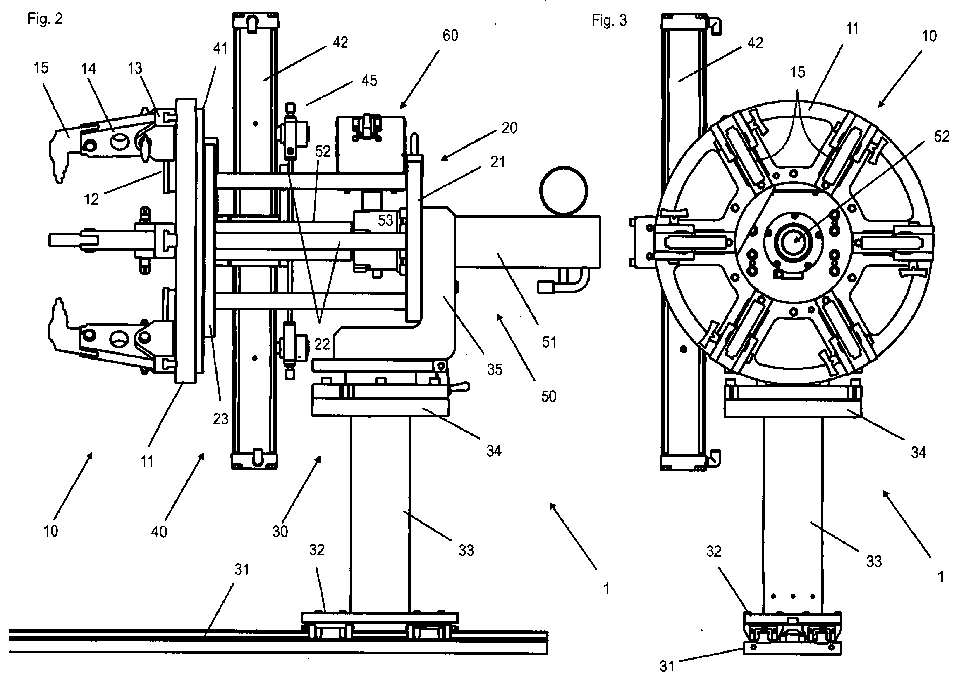

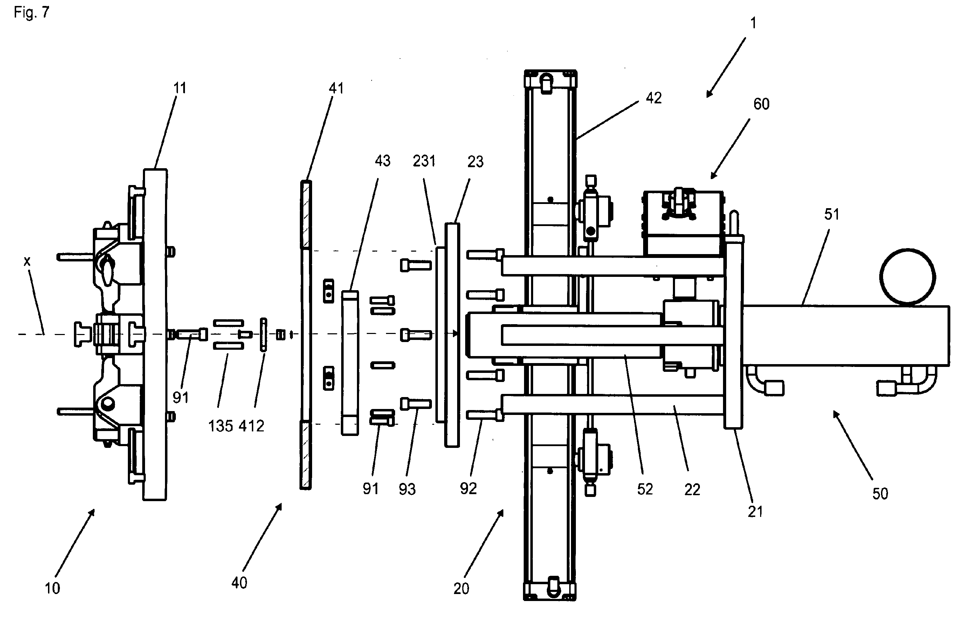

Die Figuren 2 und 7 zeigen, dass die Haltevorrichtung 20 einen Führungsring 23 mit einem daran angeformten Flanschring 231 aufweist, auf den ein Kulissenring 41 aufsetzbar ist. Der Führungsring 23 ist mittels Montageschrauben 92, 93 einerseits mit dem Werkzeugring 11 und andererseits mit Distanzwellen 22 verbunden, die von einer Halteplatte 21 gehalten werden. Die Halteplatte 21 ist über ein Kopplungsstück 35 mit der Transportvorrichtung 30 verbunden und dient zusätzlich dem Halten der Antriebsvorrichtung 50. Die Antriebsvorrichtung 50 weist bevorzugt eine hydraulische oder pneumatische Antriebseinheit 51 auf, die über eine Verbindungsvorrichtung 53 mit einem Stössel oder Zylinder 52 verbunden ist. Die Verbindungsvorrichtung 53 umfasst vorzugsweise eine Kraftmessvorrichtung, mittels der die über den Zylinder 52 auf die Radsatzwelle 81 einwirkenden Kräfte gemessen und entsprechend gesteuert werden können.

Jedem der Haltewerkzeuge 15 ist eine Distanzwelle 22 zugeordnet, weshalb Zugkräfte von der Halteplatte 21 direkt auf die Haltewerkzeuge 15 übertragen werden. Die Distanzwellen 22 sind entlang einer Mantelfläche eines virtuellen Zylinders gleichmässig verteilt, dessen Achse koaxial zur Längsachse x der Abzugsvorrichtung 1 verläuft, entlang der auch der Zylinder 52 der Antriebsvorrichtung 50 verschiebbar ist. Mit den Distanzwellen 22 kann die Abzugsvorrichtung 1 stabil und trotzdem einfach und mit nur geringem Materialaufwand aufgebaut werden. Gleichzeitig kann bei Bedarf zwischen die Distanzwellen 22 hindurch in die Abzugsvorrichtung 1 eingegriffen werden, um gegebenenfalls notwendige Manipulationen vorzunehmen.

Die in den Figuren 1, 2 und 3 gezeigte Transportvorrichtung 30 umfasst eine Stütze 33, die an der Oberseite über ein Drehgelenk 34 und das Kopplungsstück 35 mit der Halteplatte 21 und auf der Unterseite mit einem Führungswagen 32 verbunden ist, welcher mittels Laufwerken 321 entlang von Schienen 31 geführt ist. Die Laufwerke 321 umfassen die Schienen 31, so dass der Führungswagen 32 fest gehalten und nur entlang den Schienen 31 verschiebbar ist. Die Stütze 33 ist daher stets senkrecht zu den Schienen 31 ausgerichtet.

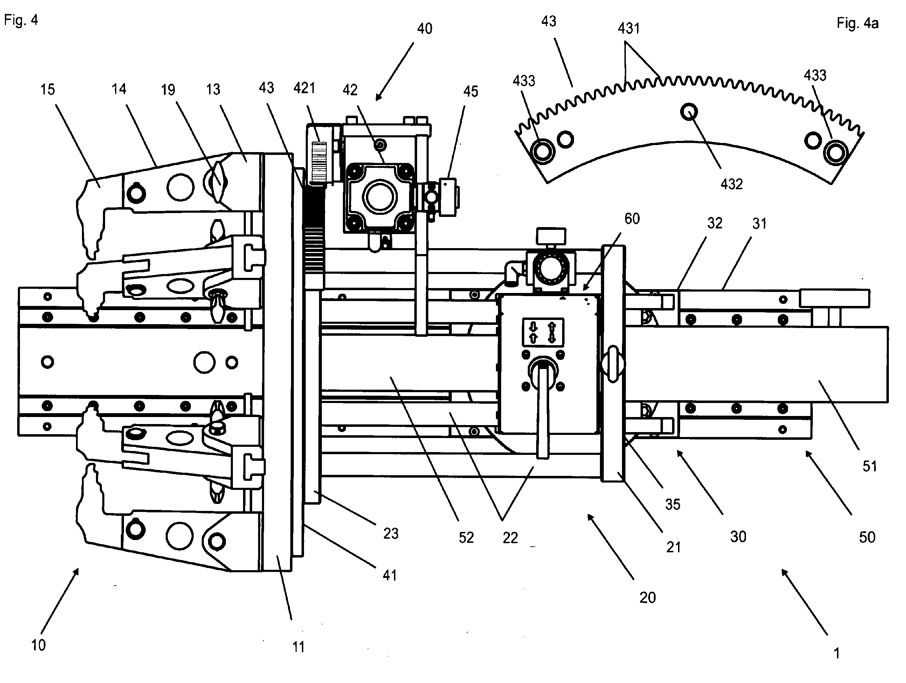

Der Spannkopf 10 ist mit einer Anziehvorrichtung 40 verbunden, welche es erlaubt, die Führungsschlitten 13 mit den Haltewerkzeugen 15 radial gegen das Zentrum des Werkzeugrings 11 und somit gegen ein entsprechend positioniertes Radsatzlager 83 zu fahren, um dieses fest zu ergreifen und zu halten. Die Anziehvorrichtung 40, deren Teile in den Figuren 4 - 8 verschiedenen Darstellungen gezeigt sind, umfasst den oben genannten Kulissenring 41, der je eine einem Werkzeug 15 zugeordnete Kulissenbahn 411 aufweist. Wie dies in Figur 6 gezeigt ist, wird in jede Kulissenbahn 411 ein Mitnehmer 412 eingesetzt, welcher mittels vier Führungsstangen 135 mit dem zugehörigen Führungsschlitten 13 verbunden ist. Jeder Mitnehmer 412 weist ein in der Kulissenbahn 411 geführtes Führungsteil 4121 und eine Mitnehmerplatte 4122 auf, welche vier Öffnungen 41221 zur Aufnahme der Führungsstangen 135 aufweist. Das Führungsteil 4121 ist vorzugsweise ein Rad oder eine Rolle, welches ohne Reibungsverluste in der Kulissenbahn 411 verschoben werden kann.

Figur 6a zeigt, dass in dieser vorzugsweisen Ausgestaltung jeder Führungsschlitten 13 an der Unterseite ebenfalls vier Öffnungen 134 zur Aufnahme der Führungsstangen 135 aufweist, die durch zwei schlitzartige Führungsöffnungen 111 im Werkzeugring 11 geführt und darin verschiebbar sind. In Figur 6 ist ferner gezeigt, dass das Führungsprofilelement 12 zwischen den beiden Führungsöffnungen 111 positioniert und mittels Montageschrauben 91 befestigt wird. Jedes Haltewerkzeug 15 wird in der in Figur 6 gezeigten Konfiguration ohne Zwischenstück 14 direkt zwischen zwei Flanschelemente 132 des Führungsschlittens 13 eingesetzt und mittels eines Montagebolzens 19 fixiert, der durch Öffnungen 131 in den Flanschelemente 132 und durch eine Montagebohrung 151 im Haltewerkzeug 15 hindurch geführt wird. Das Haltewerkzeug 15 weist einen gegen die Längsachse der Abzugsvorrichtung 1 gerichteten Werkzeugfinger 152 auf, der vorzugsweise an das abzuziehende Radsatzlager 83 angepasst ist. Durch das Lösen der Montagebolzens 19 kann der Spannkopf 10 somit innerhalb kürzester Zeit neu konfiguriert werden.

Figur 4 zeigt, dass die Anziehvorrichtung 40 einen Kulissenantrieb 42 aufweist, welcher ein Zahnrad 421 antreibt, welches mit einem Zahnradsegment 43 in Eingriff steht, dass mit dem Kulissenring 41 verbunden ist.

Das in Figur 4a vereinzelt dargestellte Zahnradsegment 43 weist an der Oberseite eine Verzahnung 431 und etwa entlang der Mittellinie drei Montageöffnungen 432 auf. Ferner sind Führungselemente 433, beispielsweise Räder oder Rollen, vorgesehen, welche beispielsweise auf dem Führungsring 23 abrollen können und den korrekten Eingriff des Zahnrads 421 in die Verzahnung 431 des Zahnradsegments 43 gewährleisten. Durch die Montageöffnungen 432 hindurch werden Montageschrauben geführt, mittels denen das Zahnradsegment 43 peripher mit dem Kulissenring 41 verbunden werden kann. Der auf dem Flanschring 231 gelagerte Kulissenring 41 kann mittels des Kulissenantriebs 42 in beide Richtungen gedreht werden. In den Figuren 8a, 8b und 8c ist gezeigt, dass mit der Drehung des Zahnradsegments 43 und somit des Kulissenrings 41 nach links die Haltewerkzeuge 15 nach innen verschoben werden. Figur 8a zeigt den koaxial zur Radsatzwelle 81 und zum Radsatzlager 83 ausgerichteten Spannkopf 10 mit zurückgefahrenen Haltewerkzeugen 15. Figur 8b zeigt die teilweise ausgefahrenen Haltewerkzeuge 15 nach einer ersten Drehung des Kulissenrings 41. In Figur 8c ist der Kulissenring 41 maximal gedreht, so dass die Haltewerkzeuge 15 maximal gegeneinander ausgefahren sind und das Radsatzlager 83 fast vollständig überdecken. Damit das Radsatzlager noch weiter abgedeckt wird, können die Werkzeugfinger 152 der Haltewerkzeuge 15 auch als Segmente eines Kreisrings ausgebildet sein, welcher das Radsatzlager 83 nach dem Zusammenfahren der Haltewerkzeuge 15 praktisch vollständig überdeckt.

Wie dies in den Figuren 1 - 4 gezeigt ist, weist die Anziehvorrichtung 40 vorzugsweise einen pneumatisch betriebenen Kulissenantrieb 42 auf, mittels dessen die Haltewerkzeuge 15 mit permanenter Kraft gegen das Radsatzlager 83 angedrückt werden können. Der Kulissenantrieb 42 umfasst beispielsweise ein Druckrohr, in dem eine mit dem Zahnrad 421 gekoppelte Zahnstange beidseitig von einem Zylinder gehalten ist. Durch Druck auf den unteren oder oberen Zylinder kann die Zahnstange entsprechend nach unten oder nach oben verschoben werden, um den Kulissenring 41 entsprechend zu bewegen.

In der gezeigten Ausgestaltung kann das Radsatzlager 83 von sechs Haltewerkzeugen 15 spielfrei erfasst und präzise von der Radsatzwelle 81 abgezogen werden, indem der Zylinder 52 der Antriebsvorrichtung 50 koaxial gegen die Radsatzwelle 81 geführt und gegen diese angedrückt wird. Dadurch wird ein Gegendruck auf die Halteplatte 21 und somit eine Zugkraft auf die Distanzwellen 22 ausgeübt, durch die der Werkzeugring 11 mit den Haltewerkzeugen 15 und dem eingespannten Radsatzlager 83 zurückgezogen wird.

Die einzelnen Vorgänge zum Abziehen eines Radsatzlagers 83 von der Radsatzwelle 81 eines Radsatzes 8 sind in den Figuren 9a, 9b und 9c gezeigt.

In Figur 9a wird der geöffnete Spannkopf 10 koaxial zur Radsatzwelle 81 ausgerichtet und soweit gegen das Rad 82 des Radsatzes 8 gefahren, bis die Haltewerkzeuge 15 mit dem Werkzeugfinger 152 hinter das Radsatzlager 83 greifen können.

In Figur 9b ist gezeigt, dass die Haltewerkzeuge 15 gegen das Radsatzlager 83 und der Zylinder 52 der Antriebsvorrichtung 50 gegen die Radsatzwelle 81 geführt wurden. Durch Andrücken des Zylinders 52 gegen die Radsatzwelle 81 resultiert eine Zugkraft welche über die Halteplatte 21, die Distanzwellen 22 und den Führungsring 23 auf den Spannkopf 10 einwirkt. Durch diese Zugkraft wird das Radsatzlager 83 von der Radsatzwelle 81 bzw. von einem Fortsatz 811 der Radsatzwelle 81 abgelöst, wie dies in Figur 9c gezeigt ist. In der Folge kann die Abzugsvorrichtung 1 gedreht und der Spannkopf 10 geöffnet werden. Diese Vorgänge zur Positionierung und Drehung der Abzugsvorrichtung 1 werden durch die Transportvorrichtung 30 unterstützt.

Die Steuerung der Abzugsvorrichtung 1 erfolgt mittels einer Steuereinheit 60, mittels der die Antriebseinheit 51 und der Kulissenantrieb 42 gegebenenfalls automatisch steuerbar sind. Nach der Positionierung der Abzugsvorrichtung 1 wird der Kulissenantrieb 42 betätigt, um die Haltewerkzeuge 15 in Eingriff mit dem Radsatzlager 83 zu bringen. In der Folge wird die Antriebseinheit 51 aktiviert, mittels der der Zylinder 52 durch den Führungsring 23, den Kulissenring 41 und den Werkzeugring 11 hindurch gegen die Radsatzwelle 81 geführt wird. Mittels der vorzugsweise vorgesehenen Kraftmessvorrichtung 53 wird die Krafteinwirkung auf das Radsatzlager 83 und auch auf die Abzugsvorrichtung 1 überwacht, um die eingeleiteten Kräfte auf zulässige Werte zu begrenzen.

### Bezugszeichenliste

- 1: Abzugsvorrichtung für Radsatzlager
- 10: Spannkopf
- 11: Werkzeugring
- 111: Führungsöffnung
- 112: Montagebohrungen
- 12: Führungsprofilelement
- 121: Montagebohrungen im Führungsprofil
- 122: Gewindebohrungen im Führungsprofil
- 13: Führungsschlitten
- 131: Montageöffnungen in Flanschelementen 132
- 132: Flanschelemente
- 133: Aufnahmeprofil
- 134: Öffnungen zur Aufnahme der Führungsstangen 135
- 135: Führungsstangen
- 14: Zwischenstück
- 15: Haltewerkzeuge
- 151: Montagebohrung im Haltewerkzeug 15
- 152: Werkzeugfinger am Haltewerkzeug 15
- 18: Werkzeugbolzen
- 19: Montagebolzen
- 20: Haltevorrichtung
- 21: Halteplatte
- 22: Distanzwellen
- 23: Führungsring
- 231: Flanschring
- 232: Durchgangsöffnungen im Flanschring 231
- 30: Transportvorrichtung
- 31: Führungsschiene
- 32: Führungswagen
- 321: Laufwerke
- 33: Stütze
- 34: Drehgelenk
- 35: Kopplungsstück
- 40: Anziehvorrichtung
- 41: Kulissenring
- 411: Kulissenbahnen
- 412: Mitnehmer
- 4121: Führungsteil
- 4122: Mitnehmerplatte
- 41221: Öffnungen zur Aufnahme der Führungsstangen 135
- 42: Kulissenantrieb
- 421: Zahnrad
- 43: Zahnradsegment
- 431: Verzahnung
- 432: Montageöffnungen im Zahnradsegment
- 433: Führungselemente, wie Rollen
- 50: Antriebsvorrichtung
- 51: Zylinderantrieb
- 52: Zylinder
- 53: Verbindungsvorrichtung mit einer Druckmessvorrichtung
- 60: Steuereinheit
- 8: Radsatz
- 81: Radsatzwelle
- 811: Fortsatz der Radsatzwelle 81
- 82: Rad
- 83: Radsatzlager
- 91: Schrauben zur Montage der Führungsprofile 12
- 92: Schrauben zur Montage der Werkzeugplatte 11
- 93: Schrauben zur Montage des Führungsrings 23

## Patentansprüche

1. Abzugsvorrichtung (1) für Radsatzlager (83) von Schienenfahrzeugen mit Haltewerkzeugen (15), die in Eingriff mit einem auf einer Radsatzwelle (81) montierten Radsatzlager (83) bringbar sind, und mit einer Antriebsvorrichtung (50), mittels der eine Druckkraft auf die Radsatzwelle (81) und eine entsprechende Abzugskraft auf die Haltewerkzeuge (15) übertragbar sind, die je mit einem Mitnehmer (412) verbunden sind, welcher in einer Kulissenbahn (411) eines drehbar gelagerten und mit einem Kulissenantrieb (42) gekoppelten Kulissenrings (41) geführt ist, **dadurch gekennzeichnet, dass** die Haltewerkzeuge (15) auf einem Werkzeugring (11) vorzugsweise radial gegeneinander verschiebbar gelagert und vorzugsweise lösbar mit je einem Führungsschlitten (13) verbunden sind, welcher ein Aufnahmeprofil (133) aufweist, in das ein vom Werkzeugring (11) gehaltenes Führungsprofilelement (12) eingreift und dass jeder Führungsschlitten (13) mittels wenigstens einer durch eine Führungsöffnung (111) im Werkzeugring (11) hindurchgeführte Führungsstange (135) mit dem zugehörigen Mitnehmer (412) verbunden ist.

2. Abzugsvorrichtung (1) nach Anspruch 1, **dadurch gekennzeichnet, dass** das Führungsprofilelement (12) mittels ersten Montageschrauben (91) auf dem Werkzeugring (11) vorzugsweise radial ausgerichtet montiert ist.

3. Abzugsvorrichtung (1) nach Anspruch 1 oder 2, **dadurch gekennzeichnet, dass** jeder Mitnehmer (412) ein in die Kulissenbahn (411) eingreifendes Führungsteil (4121), wie eine Führungsrolle, aufweist.

4. Abzugsvorrichtung (1) nach Anspruch 1, 2 oder 3, **dadurch gekennzeichnet, dass** der Kulissenring (41) mit einem Zahnrad oder einem Zahnradsegment (43) verbunden ist, welches mit einem Zahnrad (421) gekoppelt ist, das vom Kulissenantrieb (42) antreibbar ist.

5. Abzugsvorrichtung (1) nach einem der Ansprüche 1 - 4, **dadurch gekennzeichnet, dass** der Kulissenantrieb (42) ein hydraulischer oder pneumatischer Antrieb ist, durch den der Kulissenring (41) bis zu einem Endanschlag drehbar ist, bei dem die Haltewerkzeuge (15) an das Radsatzlager (83) anschlagen und gegen dieses gepresst werden.

6. Abzugsvorrichtung (1) nach einem der Ansprüche 1 - 5, **dadurch gekennzeichnet, dass** ein Führungsring (23) mit einem Flanschring (231) vorgesehen ist, welcher in den Kulissenring (41) eingreift und einerseits mittels zweiten Montageschrauben (92) mit dem Werkzeugring (11) und anderseits mittels dritten Montageschrauben (93) mit ersten Enden von Distanzwellen (22) verbunden ist, deren zweite Enden mit einer Halteplatte (21) verbunden sind, welche mit der Antriebsvorrichtung (50) verbunden ist.

7. Abzugsvorrichtung (1) nach Anspruch 6, **dadurch gekennzeichnet, dass** jedem der Haltewerkzeuge (15) eine Distanzwelle (22) zugeordnet ist, die vorzugsweise derart angeordnet ist, dass sich die Achsen der Distanzwellen (22) und die Bahnen der Haltewerkzeuge (15) bzw. die Achsen der Führungsprofilelemente (12) in dem Bereich schneiden, in dem die Haltewerkzeuge (15) das Radsatzlager (83) erfassen.

8. Abzugsvorrichtung (1) nach -Anspruch 6 oder 7, **dadurch gekennzeichnet, dass** die hydraulisch, pneumatisch oder elektrisch betriebene Antriebsvorrichtung (50) einen Zylinderantrieb (51) aufweist, welcher einen Zylinder (52) antreibt, der durch den Führungsring (23), den Kulissenring (41) und den Werkzeugring (11) hindurch verschiebbar ist, wobei der Zylinderantrieb (51) vorzugsweise über eine Druckmessvorrichtung (53) mit dem Zylinder (52) verbunden ist.

9. Abzugsvorrichtung (1) nach Anspruch 6, 7 oder 8, **dadurch gekennzeichnet, dass** die Halteplatte (21) gegebenenfalls über ein Drehgelenk (34) mit einer Transportvorrichtung (30) verbunden ist, die eine Stütze (33) aufweist, welche entlang von Schienen (31) verschiebbar und/oder in der Höhe verstellbar ist.

10. Abzugsvorrichtung (1) nach Anspruch 9, **dadurch gekennzeichnet, dass** die Stütze (33) von einem Führungswagen (32) gehalten ist, welcher Laufwerke (321) aufweist, welche formschlüssig mit der zugehörigen Führungsschiene (31) verbunden sind.

11. Abzugsvorrichtung (1) nach einem der Ansprüche 1 - 10, **dadurch gekennzeichnet, dass** die die Anzahl der Haltewerkzeuge (15) in Abhängigkeit der aufzubringenden Abzugskraft in einem Bereich von wenigstens drei bis acht oder höher gewählt wird.

12. Abzugsvorrichtung (1) nach einem der Ansprüche 1 - 11, **dadurch gekennzeichnet, dass** die Haltewerkzeuge (15) je über ein Zwischenstück (14) mit dem Führungsschlitten (13) verbunden sind.

13. Abzugsvorrichtung (1) nach einem der Ansprüche 1 - 12, **dadurch gekennzeichnet, dass** die Haltewerkzeuge (15) vorzugsweise um 90° gegeneinander geneigte Werkzeugfinger (152) aufweisen.

14. Abzugsvorrichtung (1) nach einem der Ansprüche 1 - 13, **dadurch gekennzeichnet, dass** jede der Kulissenbahnen (411) gegenüber der Längsachse des zugehörigen Führungsprofilelements (12) geneigt ist.

## Claims

1. Extraction device (1) for wheelset bearings (83) of track vehicles with holding tools (15), which can be brought into engagement with a wheelset bearing (83) mounted on a wheelset axle (81), and with a drive device (50), with which a compressive force is transferable to the wheelset axle (81) and a corresponding pull-off force is transferable to the holding tools (15), which are each connected to a cam (412), which is guided in a cam track (411) of a cam ring (41) that is rotatably held and coupled with a cam mechanism drive (42), **characterised in that** the holding tools (15) are mounted, preferably radially shiftable against one another, on a tool ring (11) and preferably releasably connected to a guide sledge (13), which comprises a receiving profile (133), into which a guide profile element (12) is engaged that is held by the tool ring (11) and that each guide sledge (13) is connected by means of at least one guide rod (135), which is traversing a guide opening (111) in the tool ring (11), with a related cam (412).

2. Extraction device (1) according to claim 1, **characterised in that** the guide profile element (12) is mounted by means of first mounting screws (91) preferably radially aligned on the tool ring (11).

3. Extraction device (1) according to claim 1 or 2, **characterised in that** each cam (412) comprises a guide member (4121), such as a guide roller, that is engaged in the cam track (411).

4. Extraction device (1) according to claim 1, 2 or 3, **characterised in that** the cam ring (41) is connected to a gear wheel or to a gear wheel segment (43), which is coupled with a gear wheel (421) that can be driven by the cam mechanism drive (42).

5. Extraction device (1) according to one of the claims 1 - 4, **characterised in that** the cam mechanism drive (42) is a hydraulic or pneumatic drive, with which the cam ring (41) is turnable up to an end stop, at which the holding tools (15) engage the wheelset bearing (83) and are pressed against it.

6. Extraction device (1) according to one of the claims 1 - 5, **characterised in that** a guide ring (23) with a flange ring (231) is provided, which engages into the cam ring (41) and on one side with second mounting screws (92) is connected to the tool ring (11) and on the other side is connected with third mounting screws (93) to first ends of interspacing bars (22), whose second ends are connected to a holding plate (21) that is connected to the drive device (50).

7. Extraction device (1) according to claim 6, **characterised in that** each one of the holding tools (15) is assigned to an interspacing bar (22), which preferably is arranged in such a way that the axes of the interspacing bars (22) and the tracks of the holding tools (15) or the axes of the guide profile elements (12), respectively, intersect in the range, in which the holding tools (15) engage the wheelset bearing (83).

8. Extraction device (1) according to claim 6 or 7, **characterised in that** the hydraulically, pneumatically or electrically operated drive device (50) comprises a cylinder drive (51), which drives a cylinder (52), which is movable through the guide ring (23), the cam ring (41) and the tool ring (11), wherein the cylinder drive (51) is preferably connected via a pressure measurement device (53) with the cylinder (52).

9. Extraction device (1) according to claim 6, 7 or 8, **characterised in that** the holding plate (21) is connected, optionally via a swivel joint (34), with a transport device (30) that comprises a support (33), which is movable along rails (31) and/or is adjustable in height.

10. Extraction device (1) according to claim 9, **characterised in that** the support (33) is held by a guiding wagon (32) that comprises carriages (321), which are connected in a form locking manner with the related guide rails (31).

11. Extraction device (1) according to one of the claims 1 - 10, **characterised in that** the number of the holding tools (15) is selected depending on the required pull-off force in a range of at least three to eight or higher.

12. Extraction device (1) according to one of the claims 1 - 11, **characterised in that** the holding tools (15) are connected each via an intermediate piece (14) with the guide sledge (13).

13. Extraction device (1) according to one of the claims 1 - 12, **characterised in that** the holding tools (15) comprise tool fingers (152) that are preferably inclined by 90° against one another.

14. Extraction device (1) according to one of the claims 1 - 13, **characterised in that** each of the cam tracks (411) is inclined relative to the longitudinal axis of the related guide profile element (12).

## Revendications

1. Dispositif d'extraction (1) pour boîtes d'essieux (83) de véhicules ferroviaires avec des outils de maintien (15), qui peuvent être mis en engagement avec une boîte d'essieux (83) montée sur un arbre d'essieu (81), et avec un dispositif d'entraînement (50), au moyen duquel une force de pression peut être transférée sur l'arbre d'essieu (81) et une force d'extraction correspondante sur les outils de maintien (15), qui sont reliés chacun à un entraîneur (412), qui est guidé dans un chemin de came (411) d'un anneau de came (41) monté de façon rotative et accouplé à un entraînement de came (42), **caractérisé en ce que** les outils de support (15) sont logés, de préférence coulissants radialement les uns par rapport aux autres, sur un anneau d'outil (11) et sont reliés de préférence de manière amovible à une luge de guidage (13), qui présente un profil de logement (133), dans lequel s'engage un élément profil de guidage (12) maintenu par l'anneau d'outil (11), et **en ce que** chaque luge de guidage (13) est reliée à l'entraîneur (412) respectif au moyen d'au moins une tige de guidage (135) passant par une ouverture de guidage (111) dans l'anneau d'outil (11).

2. Dispositif d'extraction (1) selon la revendication 1, **caractérisé en ce que** l'élément profil de guidage (12) est monté de préférence aligné radialement au moyen d'une vis de montage (91) sur l'anneau d'outil (11).

3. Dispositif d'extraction (1) selon la revendication 1 ou 2, **caractérisé en ce que** chaque entraîneur (412) présente une pièce de guidage (4121) s'engageant dans le chemin de came (411).

4. Dispositif d'extraction (1) selon la revendication 1, 2 ou 3, **caractérisé en ce que** l'anneau de came (41) est reliée à une roue dentée ou un segment de roue dentée (43), qui est couplé à une roue dentée (421) pouvant être entraînée par l'entraînement de came (42).

5. Dispositif d'extraction selon l'une des revendications 1 à 4, **caractérisé en ce que** l'entraînement de came (42) est un entraînement pneumatique ou hydraulique avec lequel l'anneau de came (41) peut tourner jusqu'à une butée d'extrémité, où les outils de guidage (15) s'engagent dans la boîte d'essieux (83) et contre laquelle ils sont pressés.

6. Dispositif d'extraction selon l'une des revendications 1 à 5, **caractérisé en ce qu'**il est prévu un anneau de guidage (23) avec une bride annulaire (231) qui s'engage dans l'anneau de came (41) et qui est reliée à l'anneau d'outil (11) d'une part au moyen de secondes vis de montage (92) et d'autre part au moyen de troisièmes vis de montage (93) à des premières extrémités d'arbres d'espacement (22) dont les deux secondes extrémités sont reliées à une plaque de maintien (21), qui est reliée au dispositif d'entraînement (50).

7. Dispositif d'extraction (1) selon la revendication 6, **caractérisé en ce que** chaque outil de maintien (15) est associé à un arbre d'espacement qui est disposé de préférence de sorte que les axes des arbres d'espacement (22) et les chemins des outils de maintien (15) ou les axes des éléments profils de guidage (12) se croisent dans la zone où les outils de maintien (15) s'engagent avec la boîte d'essieux (83).

8. Dispositif d'extraction (1) selon la revendication 6 ou 7, **caractérisé en ce que** le dispositif d'entraînement (50) électrique, hydraulique ou pneumatique présente un entraînement de cylindre (51) qui entraîne un cylindre (52) qui est coulissant à travers l'anneau de guidage (23), l'anneau de came (41) et l'anneau d'outil (11), l'entraînement de cylindre (51) étant relié de préférence par un dispositif de mesure de pression (53) au cylindre (52) .

9. Dispositif d'extraction (1) selon la revendication 6, 7 ou 8, **caractérisé en ce que** la plaque de maintien (21) est reliée le cas échéant par une articulation rotative (34) à un dispositif de transport (30), qui présente un support (33) qui est mobile le long de rails (31) et/ou est réglable en hauteur.

10. Dispositif d'extraction (1) selon la revendication 9, **caractérisé en ce que** le support (33) est maintenu par un chariot de guidage (32) qui présente des trains de roulement (321) reliés par blocage mécanique au rail de guidage (31) respectif.

11. Dispositif d'extraction selon l'une des revendications 1 à 10, **caractérisé en ce que** le nombre des outils de maintien (15) est sélectionné au moins entre trois et huit ou plus en fonction de la force d'extraction à appliquer.

12. Dispositif d'extraction (1) selon l'une des revendications 1 à 11, **caractérisé en ce que** les outils de maintien (15) sont reliés chacun par une pièce intermédiaire (14) à la luge de guidage (13).

13. Dispositif d'extraction selon l'une des revendications 1 à 12, **caractérisé en ce que** les outils de maintien (15) présentent des doigts d'outil (152) qui sont inclinés de préférence à 90° l'un vers l'autre.

14. Dispositif d'extraction selon l'une des revendications 1 à 13, **caractérisé en ce que** chaque chemin de came (411) est incliné par rapport à l'axe longitudinal de l'élément profil de guidage (12) respectif.
